# FASCICULE DE BREVET EUROPEEN

(11) **EP 4 065 424 B1**
(45) Date de publication et mention de la délivrance du brevet: **02.08.2023**
(21) Numéro de dépôt: 20807843.6
(22) Date de dépôt: 29.10.2020
(51) Int. Cl.: B60R 21/232, B60R 13/07, B60R 16/02

(54) **DÉFLECTEUR POUR COUSSIN GONFLABLE DE SÉCURITÉ DE TYPE RIDEAU**
ABLENKER FÜR EINEN VORHANG-AIRBAG
DEFLECTOR FOR A CURTAIN AIRBAG

(30) Priorité: 28.11.2019 FR 1913395
(43) Date de publication de la demande: 05.10.2022
(73) Titulaire: PSA Automobiles SA, 78300 Poissy (FR)
(72) Inventeur: FLIECX, Laurent, 92320 CHATILLON (FR); LORETTE, Frederic, 78960 VOISINS LE BRETONNEUX (FR)
(86) Numéro de dépôt international: PCT/FR2020/051959
(87) Numéro de publication internationale: WO 2021/105577

(56) Documents cités:
- EP-A1- 3 293 058
- EP-A2- 1 927 518
- JP-A- 2016 120 873
- US-A1- 2009 250 911
- US-B1- 6 189 961

## Description

### [Domaine technique]

La présente invention revendique la priorité de la demande française 1913395 déposée le 28 Novembre 2019 dont le contenu (texte, dessins et revendications) est ici incorporé par référence.

La présente invention a trait d'une manière générale la problématique du cheminement des faisceaux électriques et/ou tuyaux dans les véhicules automobiles. Elle concerne en particulier un déflecteur pour coussin gonflable de sécurité de type rideau doté d'une platine d'extension destinée à assurer le guidage d'au moins un faisceau ou tuyau cheminant dans une zone latérale arrière du véhicule.

### [Technique antérieure]

Les véhicules automobiles sont équipés de coussins gonflables de sécurité, communément désignés sous la dénomination anglaise « airbag », et comprenant de manière classique un sac gonflable replié ou enroulé, ainsi qu'un générateur de gaz pour assurer le gonflage dudit sac.

En cas de choc violent notamment lors d'un accident, le sac est brutalement mis sous pression par le générateur de gaz et se déploie dans l'habitacle du véhicule pour assurer la protection du conducteur et/ou des passagers vis-à-vis des effets de l'enfoncement de la carrosserie ou du déplacement d'un autre élément du véhicule, consécutivement à ce choc.

Afin d'assurer une sécurité optimale des occupants, les véhicules automobiles sont généralement équipés de plusieurs types de coussins gonflables et notamment de coussins de type rideau destinés à protéger les occupants lors d'un choc latéral avec un autre véhicule ou un obstacle tel qu'un poteau.

Les coussins gonflables de type rideau sont généralement implantés sur la structure de caisse du véhicule au dessus des vitres latérales avant et arrière de chaque côté de ce véhicule.

Lorsque le sac d'un tel coussin replié ou enroulé en forme de baguette est brutalement mis sous pression par le générateur de gaz, celui-ci se déploie de haut en bas en couvrant pratiquement la totalité des vitres des portières avant et arrière ainsi que le pied central du véhicule, de sorte à protéger la tête des occupants des sièges latéraux avant et arrière situés du côté de ce coussin.

Le déploiement du sac doit faire l'objet d'un contrôle minutieux afin de s'assurer qu'il s'effectue correctement et de manière fiable. Ce faisant, ce sac doit éviter toute interaction indésirable avec les composants du véhicule situés à proximité, tels que les éléments de garniture appliqués aux piliers structurels et à la doublure de custode.

Il est connu, en particulier du document EP 3 293 058 A1, de prévoir un déflecteur monté rigidement sur une zone latérale intérieure de la structure de caisse au-dessus et le long d'un élément de garniture latéral. De même, les documents US 6 189 961 B1 et EP 1 927 518 A2 décrivent des déflecteurs pour coussin gonflables de type rideau prévus pour être montés rigidement sur une zone latérale supérieure de custode de la structure de caisse d'un véhicule, le déflecteur selon le document US 6 189 961 B1 correspondant au préambule de la revendication 1.

Un tel déflecteur comporte une rampe de déflexion agencée pour guider le déploiement du sac vers le bas et vers l'intérieur afin d'empêcher que ce dernier ne s'infiltre sous cet élément de garniture de pilier ou de doublure de custode en exerçant une poussée violente contre ce dernier pouvant entrainer son éjection vers l'intérieur de l'habitacle.

La présence de tels coussins gonflables de type rideau et de tels déflecteurs complique toutefois le cheminement de certains faisceaux et/ou tuyaux le long de leurs zones d'implantation.

Tel est notamment le cas au niveau des zones latérales supérieures de custode surmontant les vitres de custode et le long desquelles peuvent cheminer plusieurs faisceaux et/ou tuyaux tel que les faisceaux électriques d'alimentation du hayon arrière et du plafonnier ainsi que le tuyau d'évacuation d'eau toit ouvrant.

Afin de guider leur cheminement et d'éviter tout risque d'interaction avec le coussin gonflable de type rideau, des orifices de clipsage pour des agrafes de bridage doivent ainsi être prévus dans ces zones latérales supérieures de custode de la structure de caisse du véhicule, ce qui pose des problèmes d'étanchéité à l'eau.

### [Exposé de l'invention]

La présente invention vise à améliorer la situation.

Elle propose à cet effet un déflecteur pour coussin gonflable de sécurité de type rideau et prévu pour être monté rigidement sur une zone latérale supérieure de custode de la structure de caisse d'un véhicule automobile au-dessus et le long d'une garniture de custode, ledit déflecteur comportant un corps comprenant une rampe de déflexion agencée pour guider le déploiement du sac gonflable dudit coussin vers l'intérieur de l'habitacle en empêchant que ce dernier s'accroche sur ladite garniture de custode. Ledit corps comporte également une platine d'extension s'étendant en arrière de ladite rampe de déflexion et comprenant au moins une goulotte de guidage incurvée pour un faisceau ou tuyau, et agencée pour contraindre ledit faisceau ou tuyau à suivre une trajectoire courbe contournant ledit sac gonflable de sorte qu'il n'interfère pas avec ce sac lors de son déploiement. La platine d'extension comprend des organes de bridage saillant depuis l'un des bords latéraux de chaque dite goulotte de guidage et aptes à y maintenir le faisceau ou tuyau correspondant. Les organes de bridage sont constitués par des crochets élastiques en forme de demi-lyre.

Une telle platine d'extension permet de guider le cheminement d'un ou plusieurs faisceaux et/ou tuyaux le long d'une partie de la zone latérale supérieure de custode en évitant d'avoir recours à des agrafes de bridage spécifiques encliquetées dans des orifices ménagés dans la structure de caisse du véhicule.

L'invention procure ainsi un meilleur niveau d'étanchéité dans la zone tout en assurant un gain sensible du temps de montage de ces faisceaux et/ou tuyaux.

Selon des caractéristiques préférées dudit déflecteur selon l'invention :
- ladite platine d'extension comprend deux dites goulottes de guidage s'étendant de manière sensiblement parallèle l'une à l'autre ;
- ladite platine d'extension comprend un premier organe de bridage pour un autre faisceau ou tuyau, écarté transversalement du côté interne vis-à-vis de la au moins dite goulotte ;
- ledit corps comporte un second organe de bridage pour ledit autre faisceau ou tuyau, saillant transversalement du côté interne depuis le bord supérieur de ladite rampe de déflexion ;
- ledit corps comporte une semelle inférieure s'étendant sensiblement transversalement du côté externe depuis le bord inférieur de ladite rampe de déflexion et de ladite platine d'extension ;
- ledit déflecteur comporte un joint d'étanchéité acoustique apposé par collage contre et le long du bord externe libre de ladite semelle inférieure et destiné à reposer en appui contre le pourtour supérieur d'une fenêtre de custode dudit véhicule ;
- ledit déflecteur comporte des moyens de fixation pour une partie de ladite garniture de custode, ménagés au niveau de ladite semelle inférieure ; et/ou
- ledit déflecteur comporte des moyens de pré-positionnement permettant de guider sa mise en place en position de montage contre ladite zone latérale supérieure de custode de la structure de caisse et d'assurer sa retenue dans cette position avant sa fixation.

### [Brève description des dessins]

L'exposé de l'invention sera maintenant poursuivi par la description détaillée d'un exemple de réalisation, donnée ci-après à titre illustratif mais non limitatif, en référence aux dessins annexés, sur lesquels :
[Fig 1] représente une vue en perspective de la zone latérale supérieure de custode de la structure de caisse d'un véhicule automobile sur laquelle sont montés un coussin gonflable de sécurité de type rideau ainsi qu'un déflecteur de guidage de ce coussin selon l'invention ;
[Fig 2] est un agrandissement du détail Il de la figure 1 montrant la platine d'extension du déflecteur ;
[Fig 3] représente une vue en perspective de la face externe du déflecteur selon l'invention ;
[Fig 4] représente une vue en coupe transversale de la zone latérale supérieure de custode prise au niveau de la rampe de déflexion pour le sac du coussin gonflable ; et
[Fig 5] est une vue en coupe transversale de la zone latérale supérieure de custode prise au niveau de la platine d'extension.

### [Description détaillée]

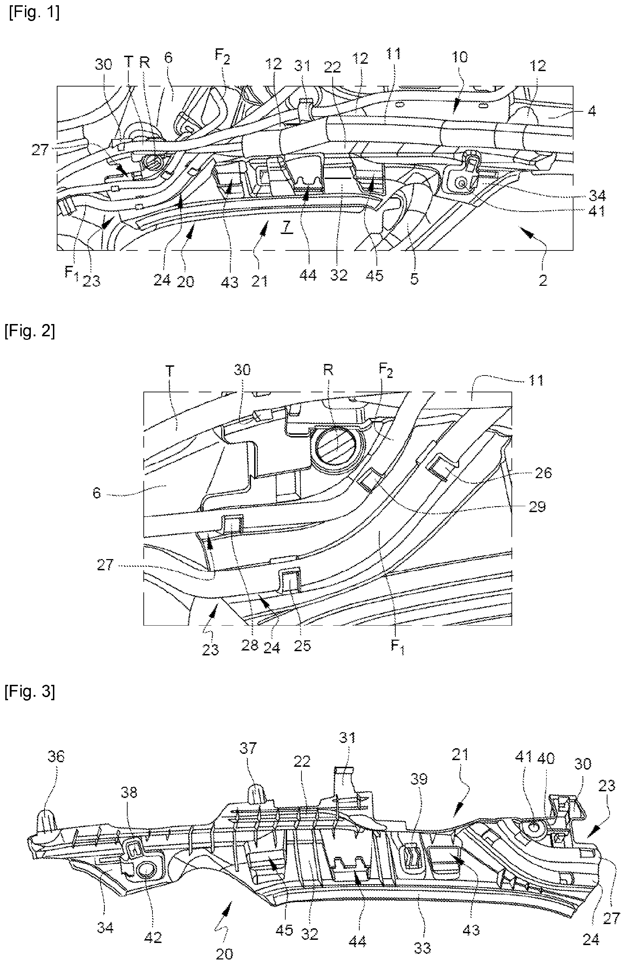

Sur la figure 1 est représenté une zone latérale supérieure de custode de la structure de caisse 2 d'un véhicule automobile sur laquelle sont montés un coussin gonflable de sécurité de type rideau 10, un déflecteur de guidage 20 selon l'invention ainsi que deux faisceaux d'alimentation électrique F₁, F₂ et un tuyau souple d'évacuation d'eau toit ouvrant T.

Dans la description qui va suivre et par convention, les termes « inférieur », « supérieur », « longitudinal » « latéral » et « transversal » seront définis par rapport à la position de montage des éléments 10, 20, F₁, F₂ et T sur un tel véhicule.

Les termes « externe » et « interne » seront quant à eux utilisés pour définir la position relative d'un élément par référence à l'axe longitudinal du véhicule. L'élément le plus proche de cet axe sera ainsi qualifié d'interne par opposition à l'autre élément plus éloigné de ce même axe qui sera quant à lui qualifié d'externe.

Par ailleurs, le terme « sensiblement » sera utilisé pour indiquer qu'un léger écart est admis par rapport à une position ou disposition nominale prédéterminée, tout en restant inclus dans le cadre de l'invention. Par exemple, « sensiblement horizontal » indiquera qu'un écart de l'ordre de 15° par rapport à une orientation strictement perpendiculaire est admis dans le cadre de l'invention.

Le coussin gonflable de sécurité 10 comporte classiquement un sac gonflable replié ou enroulé 11 se présentant sous la forme d'une baguette sensiblement tubulaire, ainsi qu'un générateur de gaz (non visible sur les figures) comprenant un conteneur métallique rigide de forme globalement cylindrique dans lequel se trouvent des réactifs permettant la génération de gaz et un déclencheur commandé électriquement.

Le sac 11 dont seule la partie arrière est visible sur la figure 1, est fixé sur la structure de caisse 2 par l'intermédiaire d'une pluralité d'organes d'attache 12 le long de la doublure arc pavillon 4, de la partie supérieure de pied arrière de la doublure de custode 5 et du gousset gouttière aile arrière 6 délimitant en partie supérieure la fenêtre de custode 7.

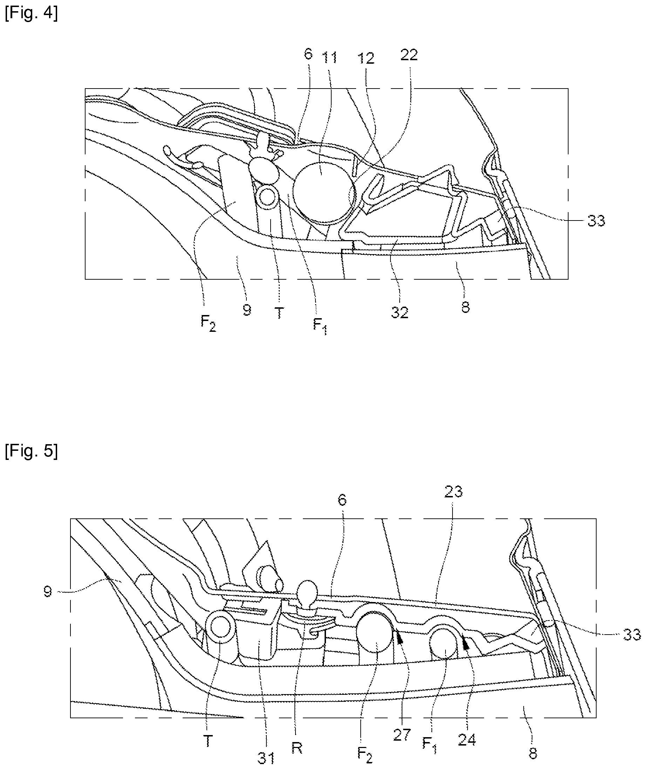

Destiné à s'étendre au dessus et le long de la garniture de custode 8 représentée sur les figure 4 et 5, le déflecteur 20 comporte un corps allongé 21 fixé de manière isostatique contre et le long de l'extrémité arrière de la doublure arc pavillon 4, de la partie supérieure de pied arrière de la doublure de custode 5 et du gousset gouttière aile arrière 6.

Venu de moulage à partir d'un polymère thermoplastique tel que le polypropylène, le polyamide ou l'Acrylonitrile Butadiène Styrène (ces matériaux présentant les avantages d'être à la fois légers et relativement élastiques), ce corps 21 comprend une rampe 22 sensiblement plane s'étendant sous la partie arrière du sac 11 suivant une pente descendante en direction de l'intérieur de l'habitacle (c'est-à-dire du côté interne).

Cette rampe 22 constitue une surface de déflexion agencée pour guider le déploiement du sac 11 vers l'intérieur de l'habitacle en empêchant que ce dernier n'accroche la garniture de custode 8 (visible sur les figures 4 et 5) recouvrant partiellement la partie supérieure de pied arrière de la doublure de custode 5 ainsi que le gousset gouttière aile arrière 6, de sorte à éviter tout risque d'éjection de cette garniture de custode 8 vers l'intérieur de l'habitacle.

Le corps 21 comporte également une platine d'extension 23 s'étendant sensiblement horizontalement en arrière de la rampe de déflexion 22.

En référence aux figures 2 et 5, la platine d'extension 23 comprend deux goulottes de guidage incurvées à sections hémicirculaires 24, 27 s'étendant de manière sensiblement parallèle l'une à l'autre et destinées chacune à accueillir un faisceau électrique correspondant F₁, F₂ cheminant au dessus et le long d'au moins une portion de la fenêtre de custode 7 entre le gousset gouttière aile arrière 6 et les garnitures de custode 8 et de pavillon 9 recouvrant ce gousset (voir figures 4 et 5).

Ces deux goulottes 24, 27 dont la concavité est tournée vers le bas sont agencées pour contraindre les faisceaux électriques F₁ et F₂ à cheminer selon une trajectoire courbe contournant le sac gonflable 11 de sorte que ces derniers n'interfèrent pas avec ce sac 11 lors de son déploiement.

La platine d'extension 23 comprend également :
- une première série de deux organes de bridage 25, 26 saillant chacun depuis le bord latéral externe de la première goulotte 24 à proximité d'une extrémité respective de cette dernière et permettant d'y maintenir le premier faisceau F₁ ; et
- une seconde série de deux organes de bridage 28, 29 saillant chacun depuis le bord latéral externe de la seconde goulotte 27 à proximité d'une extrémité respective de cette dernière et permettant d'y maintenir le premier faisceau F₂.

Chaque organe de bridage 25, 26, 28, 29 est constitué par un crochet élastique en forme de demi-lyre dont la concavité est tournée du côté interne (c'est-à-dire vers l'habitacle) de sorte à faciliter la mise en place des faisceaux électriques F₁ et F₂ par l'opérateur.

L'extrémité libre de chacun de ces crochets élastiques 25, 26, 28, 29 est en outre recourbée à l'opposé de leur concavité (c'est-à-dire vers l'extérieur du véhicule) de sorte à faciliter l'insertion des faisceaux F₁ et F₂.

Comme on peut le voir sur les figures 1 à 3, la platine d'extension 23 comporte également un premier organe de bridage 30 pour le tuyau souple d'évacuation d'eau toit ouvrant T.

Constitué par une pince élastique comprenant deux branches en arc de cercle en regard l'une de l'autre et définissant entre leurs extrémités libres une fente d'insertion pour le tuyau T, cet organe de bridage 30 est écarté transversalement du côté interne vis-à-vis des deux goulottes 24, 27.

Le corps 21 comprend un second organe de bridage 31 pour le tuyau souple d'évacuation d'eau toit ouvrant T, saillant transversalement du côté interne depuis le bord supérieur de la rampe de déflexion 22.

Ce second organe de bridage 31 est constitué par un crochet élastique en forme de demi-lyre, semblable aux crochets 25, 26, 28, 29 et dont la concavité est tournée vers le haut.

Le corps 21 comporte également une semelle inférieure 32 s'étendant sensiblement transversalement du côté externe depuis le bord inférieur de la rampe de déflexion 22 et de la platine d'extension 23.

Tel qu'illustré par les figures 3 à 5, un joint d'étanchéité acoustique en mousse 33 est apposé par collage contre et le long du bord externe libre de cette semelle inférieure 32, ce joint 33 étant prévu pour reposer en appui contre le rebord inférieur du gousset gouttière aile arrière 6 définissant le pourtour supérieur de fenêtre de custode 7 de sorte à limiter les remontées des bruits depuis cette dernière.

Le corps 21 comporte enfin une paroi avant de couverture 34 s'étendant sous la partie avant de la rampe de déflexion 22 dans le prolongement avant de la semelle 32 et destinée à recouvrir la partie supérieure de pied arrière de la doublure de custode 5.

Tel qu'illustré sur la figure 3, le déflecteur 20 comprend également des moyens de pré-positionnement permettant de guider sa mise en place en position de montage contre le gousset gouttière aile arrière 6 et la partie supérieure de pied arrière de la doublure de custode 5, ainsi que de le retenir dans cette position avant sa fixation.

Ces moyens de pré-positionnement comportent deux pattes d'embectage 36, 37 saillant vers le haut depuis deux zones longitudinalement espacées du bord externe de la rampe de déflexion 22 du corps 21 et destinées à venir s'insérer dans deux fenêtres correspondantes ménagées respectivement dans l'extrémité arrière de la double arc pavillon 4 et la partie supérieure de pied arrière de la doublure de custode 5.

Les moyens de pré-positionnement comportent également trois tétons de retenue 38, 39, 40, saillant transversalement du côté externe depuis des zones longitudinalement espacées de la face intérieure du corps 21 et destinés à venir s'insérer au travers de trois orifices correspondants ménagés respectivement dans la partie supérieure de pied arrière de la doublure de custode 5 et le gousset gouttière aile arrière 6.

Certains de ces tétons 38, 39, 40 sont avantageusement doté d'une languette élastique apte, lors de son insertion dans l'orifice correspondant, à coopérer par encliquetage avec le pourtour de cet orifice de sorte à assurer la retenue de ce déflecteur 20 suivant une direction transversale.

En référence à la figure 3, le déflecteur 20 comporte en outre deux orifices circulaires 41, 42 ménagés sur le corps 21 à proximité de ses deux extrémités longitudinales et permettant d'assurer sa fixation respectivement sur le gousset gouttière aile arrière 6 via un rivet plastique R et sur la doublure de custode 5 via une vis (non représentée) traversant préalablement la garniture de custode 8.

Le déflecteur 20 comprend enfin des moyens de retenue 43, 44, 45 pour le bandeau supérieur de la garniture de custode s'étendant longitudinalement le long de la fenêtre de custode 7 et transversalement entre la face interne du bord supérieur de cette dernière et le bord interne de la garniture de pavillon 9.

Ces moyens de retenue comportent ici trois fenêtres 43, 44, 45 ménagées sur la semelle 22 du corps 21 et destinées à être traversées par trois pattes saillant transversalement depuis la face intérieure du bandeau supérieur de la garniture de custode 8.

Selon des variantes de réalisation non représentées, l'extension d'attache et de guidage comporte un nombre différent de goulottes de guidage (par exemple, une ou trois) dont les profils et dimensions peuvent également varier.

Selon d'autres variantes de réalisation non représentées, les moyens de pré-positionnement, de fixation et/ou de retenue sont également conformés différemment.

## Revendications

1. Déflecteur pour coussin gonflable de sécurité de type rideau et prévu pour être monté rigidement sur une zone latérale supérieure de custode de la structure de caisse d'un véhicule automobile au-dessus et le long d'une garniture de custode, ledit déflecteur comportant un corps comprenant une rampe de déflexion agencée pour guider le déploiement du sac gonflable dudit coussin vers l'intérieur de l'habitacle en empêchant que ce dernier s'accroche sur ladite garniture de custode,
ledit corps comportant également une platine d'extension s'étendant en arrière de ladite rampe de déflexion et comprenant au moins une goulotte de guidage incurvée pour un faisceau ou tuyau, et agencée pour contraindre ledit faisceau ou tuyau à suivre une trajectoire courbe contournant ledit sac gonflable de sorte qu'il n'interfère pas avec ce sac lors de son déploiement, **caractérisé en ce que** ladite platine d'extension comprend des organes de bridage constitués par des crochets élastiques en forme de demi-lyre et saillant depuis l'un des bords latéraux de chaque dite goulotte de guidage et aptes à y maintenir le faisceau ou tuyau correspondant.

2. Déflecteur selon la revendication 1, **caractérisé en ce que** ladite platine d'extension comprend deux dites goulottes de guidage s'étendant de manière sensiblement parallèle l'une à l'autre.

3. Déflecteur selon l'une des revendications 1 à 2, **caractérisé en ce que** ladite platine d'extension comprend un premier organe de bridage pour un autre faisceau ou tuyau, écarté transversalement du côté interne vis-à-vis de la au moins dite goulotte.

4. Déflecteur selon la revendication 3, **caractérisé en ce que** ledit corps comporte un second organe de bridage pour ledit autre faisceau ou tuyau, saillant transversalement du côté interne depuis le bord supérieur de ladite rampe de déflexion.

5. Déflecteur selon l'une des revendications 1 à 4, **caractérisé en ce que** ledit corps comporte une semelle inférieure s'étendant sensiblement transversalement du côté externe depuis le bord inférieur de ladite rampe de déflexion et de ladite platine d'extension.

6. Déflecteur selon la revendication 5, **caractérisé en ce qu'**il comporte un joint d'étanchéité acoustique apposé par collage contre et le long du bord externe libre de ladite semelle inférieure et destiné à reposer en appui contre le pourtour supérieur d'une fenêtre de custode dudit véhicule.

7. Déflecteur selon l'une des revendications 5 ou 6, **caractérisé en ce qu'**il comporte des moyens de fixation pour une partie de ladite garniture de custode, ménagés au niveau de ladite semelle inférieure.

8. Déflecteur selon l'une des revendications 1 à 7, **caractérisé en ce qu'**il comporte des moyens de pré-positionnement permettant de guider sa mise en place en position de montage contre ladite zone latérale supérieure de custode de la structure de caisse et d'assurer sa retenue dans cette position avant sa fixation.

## Patentansprüche

1. Ablenkvorrichtung für einen vorhangartigen Airbag, die zur festen Befestigung an einem oberen seitlichen Custodbereich der Karosseriestruktur eines Kraftfahrzeugs über und entlang einer Custoddecke vorgesehen ist, wobei die Ablenkvorrichtung einen Körper mit einer Ablenkrampe aufweist, die so angeordnet ist, dass sie die Entfaltung des Airbags aus dem Airbag in das Innere des Fahrgastraums führt, indem verhindert wird, dass sich der Airbag an der Custoddecke festklemmt,
der Körper umfasst auch eine Verlängerungsplatte, die sich hinter der Ablenkrampe erstreckt und mindestens eine gekrümmte Führungsrinne für ein Bündel oder Rohr umfasst, und die so angeordnet ist, dass sie das Bündel oder Rohr zwingt, einem gekrümmten Weg zu folgen, der den Airbag umgeht, sodass es diesen beim Entfalten nicht stört, **dadurch gekennzeichnet, dass** die Verlängerungsplatte Klemmelemente umfasst, die aus elastischen Haken in Form einer Halbscheibe bestehen, die von einer der Seitenkanten jedes Führungsrinnens vorstehen und in der Lage sind, das entsprechende Bündel oder Rohr darin zu halten.

2. Deflektor nach Anspruch 1, **dadurch gekennzeichnet, dass** die Verlängerungsplatte zwei Führungsrinnen umfasst, die sich im Wesentlichen parallel zueinander erstrecken.

3. Deflektor nach einem der Ansprüche 1 bis 2, **dadurch gekennzeichnet, dass** die Verlängerungsplatine ein erstes Klemmelement für ein anderes Bündel oder Rohr aufweist, das quer von der Innenseite, gegenüber der mindestens einen Rinne beabstandet ist.

4. Deflektor nach Anspruch 3, **dadurch gekennzeichnet, dass** der Körper ein zweites Klemmelement für das andere Bündel oder Rohr aufweist, das von der Oberkante der Ablenkrampe quer zur Innenseite vorsteht.

5. Deflektor nach einem der Ansprüche 1 bis 4, **dadurch gekennzeichnet, dass** der Körper eine untere Sohle aufweist, die sich im Wesentlichen quer zur Außenseite von der Unterkante der Ablenkrampe und der Verlängerungsplatte erstreckt.

6. Deflektor nach Anspruch 5, **dadurch gekennzeichnet, dass** er eine akustische Dichtung aufweist, die durch Kleben an und entlang der freien Außenkante der unteren Sohle angebracht ist und dazu bestimmt ist, in Anlage an den oberen Umfang eines Fensters des Unterschenkels des Fahrzeugs zu ruhen.

7. Deflektor nach einem der Ansprüche 5 oder 6, **dadurch gekennzeichnet, dass** er Befestigungsmittel für einen Teil der Custode-Packung aufweist, die im Bereich der unteren Sohle vorgesehen sind.

8. Deflektor nach einem der Ansprüche 1 bis 7, **dadurch gekennzeichnet, dass** er Vorpositionierungsmittel aufweist, die es ermöglichen, seine Positionierung in der Montageposition gegen den oberen seitlichen Bereich des Oberschenkels der Aufbaustruktur zu führen und seine Zurückhaltung in dieser Position vor seiner Befestigung sicherzustellen.

## Claims

1. A deflector for a curtain-type airbag and designed to be mounted rigidly on an upper side rear part of the body structure of a motor vehicle above and along a rear part lining, said deflector comprising a body comprising a deflection ramp arranged to guide the deployment of the airbag of said cushion towards the interior of the passenger compartment by preventing the latter from catching on said rear part lining,
said body also comprising an extension plate extending behind said deflection ramp and comprising at least one curved guide chute for a bundle or pipe, and arranged to constrain said bundle or pipe to follow a curved trajectory circumventing said inflatable bag so that it does not interfere with this bag during its deployment, **characterized in that** said extension plate comprises clamping members consisting of elastic hooks in the form of a half-lyre and projecting from one of the lateral edges of each said guide chute and capable of holding the corresponding bundle or pipe there.

2. A deflector according to Claim 1, **characterized in that** said extension plate comprises two said guide chutes extending substantially parallel to each other.

3. Deflector according to one of Claims 1 to 2, **characterized in that** the said extension plate comprises a first clamping member for another bundle or pipe, spaced transversely on the internal side with respect to the at least said chute.

4. A deflector according to Claim 3, **characterized in that** said body includes a second clamping member for said other bundle or pipe, projecting transversely from the inner side from the upper edge of said deflection ramp.

5. Deflector according to one of Claims 1 to 4, **characterized in that** the said body comprises a lower sole extending substantially transversely from the outer side from the lower edge of the said deflection ramp and of the said extension plate.

6. Deflector according to Claim 5, **characterized in that** it comprises an acoustic seal affixed by adhesive bonding to and along the free outer edge of the said lower sole plate and intended to rest against the upper perimeter of a rear window of the said vehicle.

7. Deflector according to either of Claims 5 and 6, **characterized in that** it comprises fastening means for a part of the said rear quarter fitting, provided at the level of the said lower sole.

8. Deflector according to one of Claims 1 to 7, **characterized in that** it comprises pre-positioning means making it possible to guide its installation in the mounting position against the said upper lateral quarter zone of the body structure and to ensure its retention in this position before it is fixed.
